# FASCICULE DE BREVET EUROPEEN

(11) **EP 1 115 294 B1**
(45) Date de publication et mention de la délivrance du brevet: **02.05.2003**
(21) Numéro de dépôt: 99943003.6
(22) Date de dépôt: 20.09.1999
(51) Int. Cl.: A23B 4/02, A23B 4/24, A23B 5/18, A23B 4/027, A23B 7/157

(54) **SOLUTION UTILE POUR LA DECONTAMINATION BACTERIENNE DE DENREES ALIMENTAIRES ET SON PROCEDE D'UTILISATION**
BACTERIELDEKONTAMINIERUNGSLÖSUNG FÜR LEBENSMITTEL UND VERWENDUNGSVERFAHREN
SOLUTION USEFUL FOR BACTERIAL DECONTAMINATION OF FOODSTUFFS AND METHOD FOR USING SAME

(30) Priorité: 25.09.1998 FR 9812025
(43) Date de publication de la demande: 18.07.2001
(73) Titulaire: Rhodia Chimie, 92512 Boulogne-Billancourt Cedex (FR)
(72) Inventeur: VINCENT, Sophie, F-94110 Arcueil (FR)
(74) Mandataire: Ricalens, François
(86) Numéro de dépôt international: FR9902226
(87) Numéro de publication internationale: WO00018246

(56) Documents cités:
- EP-A- 0 659 346
- GB-A- 935 413
- US-A- 5 069 922
- US-A- 5 143 739
- US-A- 5 262 186
- US-A- 5 283 073
- US-A- 5 354 568
- US-A- 5 512 309

## Description

La présente invention concerne des solutions aqueuses utiles pour la décontamination bactérienne des denrées alimentaires. Elle concerne plus particulièrement des solutions peu concentrées contenant à la fois un composé basique et un phosphate tribasique.

La contamination bactérienne des denrées alimentaires est un problème qui préoccupe de plus en plus les autorités et les sociétés de distribution de denrées alimentaires. En effet, la contamination bactérienne provoque une altération des aliments et peut provoquer des intoxications graves chez le consommateur final ; soit que cette intoxication soit une intoxication directe lorsque l'aliment est consommé cru sans destruction de la flore microbienne, soit que cet aliment soit contaminé par des toxines libérées par les bactéries, au cours de leur vie ou à l'occasion de leur mort.

Le problème est particulièrement aigu dans le cas des productions animales.

De nombreux procédés de décontamination de denrées alimentaires animales ont déjà été proposés. Toutefois seuls quelques-uns présentent un équilibre entre leur coût et l'efficacité qui en permette l'utilisation à l'échelle industrielle.

En effet, le problème est complexe car il convient, d'une part, de décontaminer la surface de la denrée et, d'autre part, d'éviter une recontamination ultérieure, soit au cours du traitement, soit au cours d'un rinçage subséquent ou précédent.

Par ailleurs, l'efficacité de la décontamination doit être extrêmement rapide ; faute de quoi les traitements ne peuvent être réalisés à une échelle industrielle car ils impliqueraient des volumes de traitement considérables.

En outre, lorsque le traitement vise des carcasses animales terrestres et met en oeuvre une phase aqueuse, un contact prolongé risque d'être gênant et peut conduire à la prise de poids par incorporation d'eau dans les denrées alimentaires traitées par le procédé, prise de poids qui est réglementé dans de nombreux pays.

Le problème de la contamination est particulièrement aigu dans les aliments ou denrées alimentaires qui n'ont subi aucune préparation, et/ou qui n'ont pas été cuits. On peut citer ainsi les productions végétales directement après la récolte et les denrées animales immédiatement après la pêche ou l'abattage. US-A-5 283 073 divulgue un procédé de traitement des carcasses de volailles pour maîtriser la contamination et / ou la croissance bactérienne. US-A-5 512 309 divulgue un procédé pour le traitement des carcasses de volailles pour en augmenter la durée de conservation. EP-A-0 659 346 divulgue un procédé de traitement des carcasses de volailles pour en augmenter la durée de conservation et maîtriser le développement des salmonella et US-A-5 143 739 divulgue un procédé pour le traitement des carcasses de volailles pour maîtriser la croissance des salmonella.

Ainsi, comme produits susceptibles d'être traités, on trouve les carcasses d'animaux morts peu de temps après le sacrifice des animaux en vue de leur consommation.

Sans que cela soit limitatif, on peut citer les carcasses de quadrupèdes, notamment, des bovidés tels les bovinés (par exemple buffles, urus, bisons), les antilopes, les ovinés, les caprinés (y compris les gibiers tels que cerfs, chamois, daims, élans, orignaux, isards, chevreuils), de suidés (par exemple, porcs, sangliers, pécaris), de lagomorphes (tels que lapins, lièvres, agoutis.) ainsi que les carcasses de volailles parmi lesquelles on peut citer la totalité des volailles sauvages et/ou d'élevage depuis les plus petits (par exemple couroucous, mauviettes) jusqu'aux ratites (par exemple autruches), en passant notamment par les passereaux (par exemple grives), les gallinacés (par exemple, poules, cailles, pintades, perdrix, dindes, tétras) et les anatidés (par exemple canards, oies, sarcelles).

Le traitement peut s'appliquer aussi aux reptiles et aux poissons.

Les carcasses peuvent être traitées avant, mais avantageusement après dépouillement. Dans le cas des volatiles, il est souhaitable qu'il soit fait après la plumaison.

Un des problèmes les plus gênants dans le traitement des carcasses animales réside dans le fait que ces carcasses doivent souvent être lavées avec des quantités élevées d'eau et que cette eau est souvent le vecteur d'un transfert d'une contamination depuis une carcasse particulière jusqu'à l'ensemble des carcasses.

Une des solutions préconisées à ce jour est l'utilisation d'eau de Javel à des concentrations de l'ordre de plusieurs centaines de ppm, en général aux alentours de 600 à 800 ppm.

Toutefois, certains scientifiques considèrent que l'utilisation d'eau de Javel pour le traitement des carcasses pourrait impliquer un risque de cancer lorsque les concentrations d'eau de Javel sont élevées et notamment lorsqu'elles sont supérieures à 500 ppm de chlore.

C'est pourquoi un des buts de la présente invention est de fournir une technique qui soit susceptible d'empêcher les eaux de lavage et de rinçage des carcasses animales sans que cela implique l'utilisation à une teneur supérieure à 500 ppm de chlore contenu de préférence à 200 ppm et, plus préférentiellement, à 100 ppm.

Un autre but de la présente invention est de fournir un procédé qui permette d'obtenir une décontamination des eaux de lavage et de rinçage en utilisant des eaux présentant peu de matières minérales, de préférence au plus 2% en masse.

Ces buts et d'autres qui apparaîtront par la suite sont atteints au moyen d'un procédé de traitement d'aliments qui comporte une étape de mise en contact dudit aliment avec une solution présentant une concentration en OH⁻ comprise entre 0,02 et 0,2 N (équivalent par litre) et par le fait qu'on y ajoute un sel tribasique de l'acide orthophosphorique de manière que le rapport entre la concentration initiale d'ions OH⁻ et la concentration en orthophosphates exprimée en équivalent soit au moins égal à 1/4, avantageusement à 1/3, de préférence à 1/2, plus préférentiellement à 1.

Il est avantageux que la teneur en espèces orthophosphates soit au moins égale à 0,01 M et au plus égale à 0,1 M.

La teneur initiale en ions OH⁻ est avantageusement au moins égale à 0,05 M.

Par concentration initiale en ions OH- on entend la concentration en ions OH- de la solution sans sel tribasique de l'acide orthophosphorique.

En d'autres termes, il s'agit donc de la concentration en ions OH⁻ qui est obtenue en l'absence de sel tribasique de l'acide phosphorique, plus généralement en l'absence de tout phosphate. Cette valeur des ions OH- peut aisément être mesurée par les techniques bien connues de l'homme de métier par l'intermédiaire d'un pH-mètre avec des électrodes adaptées au type de milieu et au domaine de pH considéré, c'est-à-dire au domaine compris entre environ 12 et environ 13.

Les valeurs sont données pour une température de 25°C et sous pression atmosphérique.

Compte tenu du risque inhérent à l'utilisation de solution très basique de dénaturer les aliments il est préférable d'utiliser des solutions présentant une teneur initiale en ions OH- au plus égale à 0,1 N (correspondant à 25°C à un pH de 13).

Il est également préférable que la teneur en ions phosphates de la solution soit au plus égale à 0,1 N et ce pour éviter que la solution ne soit trop chargée en éléments minéraux.

Pour obtenir un effet significatif de synergie entre les ions OH⁻ et les espèces phosphates, il est préférable que ces dernières soient présentes à une concentration au moins égale à 0,02 M. Les ions OH-sont avantageusement sous la forme d'hydroxydes alcalins, d'hydroxydes d'ammonium, ou de phosphonium quaternaires, ou sous la forme d'hydroxyde(s) de cation(s) masqué(s) par complexation (essentiellement des agents de complexation neutres complexants ou séquestrants comme par exemple les éthers couronnes).

Toutefois compte tenu des quantités énormes à traiter et du prix de ces derniers composés, il est préférable que les cations associés aussi bien à l'ion hydroxyde qu'à l'ion PO₄³⁻ soient des alcalins ou des mélanges de divers alcalins. Le lithium n'est pas préféré, tant s'en faut, pour cette application, les plus efficaces étant le potassium, le rubidium et le césium, un bon compromis réside dans l'utilisation de l'ion sodium ou de l'ion potassium et de leurs mélanges. Le rubidium et le césium, quoique donnant d'excellents résultats, sont beaucoup trop chers pour ce type d'application.

Les ions OH⁻ peuvent être introduits de toutes les manières connues de l'homme de métier, que ce soit sous la forme de sels d'acide très faibles, ou par réaction de composés précipitables (par exemple un mélange successif de phosphate trisodique associé à un hydroxyde de calcium précipitant ainsi le phosphate et conduisant à la formation de soude in situ).

On peut utiliser également des produits du type oxylithe (Na₂O₂) qui peuvent donner naissance à de la soude et de l'eau oxygénée, laquelle renforcera l'action du système anticontaminant et ce dans des conditions basiques qui donnent à l'eau oxygénée une durée de vie extrêmement courte.

On peut également envisager d'introduire les ions OH- sous la forme d'alcoolates qui donneront par action sur l'eau un hydroxyde et un alcool, lequel pourra être évaporé au cours du traitement.

L'alcool ne modifie pas, jusqu'à une teneur d'environ 5%, les propriétés de la solution.

Toutefois, il est plus simple d'introduire les ions hydroxydes sous forme d'hydroxyde(s) alcalin(s) mais également alcalins ou d'un mélange de phosphates alcalins.

La solution visée par la présente invention est particulièrement bien adaptée au rinçage et peut par exemple être utilisée avant ou après un autre traitement de décontamination des denrées proprement dites. Elle peut être utilisée plus spécifiquement pour éviter la contamination après une étape de contamination par exemple dans le système désigné par le terme anglo-saxon "tank chiller", c'est-à-dire dans un système de refroidissement dans un réservoir d'eau à fort débit.

La solution selon la présente invention est également utilisable pour la décontamination, il suffit d'adapter le temps de contact. Toutefois, lorsque la teneur en ions minéraux est faible, un allongement de la durée du contact risque d'être gênante et peut conduire à la prise de poids par incorporation d'eau dans les denrées alimentaires traitées par le procédé, prise de poids qui est réglementée dans de nombreux pays.

Le système décontaminant présente l'avantage d'être compatible avec beaucoup d'autres systèmes décontaminants, qu'ils soient organiques ou minéraux.

L'effet des solutions selon l'invention peut être renforcé par des oxydants ; parmi ceux-ci on peut certes citer les permanganates et les bichromates mais ces derniers sont colorés et peuvent dans certaines conditions conduire à des précipités, lesquels peuvent apporter de la gêne dans le procédé. Aussi les oxydants contenant de l'ozone et/ou de l'eau oxygénée, voire les hypochlorites sont préférés.

Du point de vue de l'efficacité du traitement, il est souhaitable que le pouvoir oxydant de la solution soit au moins égal à 0,001 N, avantageusement à 0,002 N, de préférence à 0,005 N (équivalent d'électron par litre). Toutefois, il convient de limiter le plus possible la concentration de ces agents, lesquels n'ont pas toujours bonne réputation. Aussi l'un des meilleurs agents serait l'ozone, n'était son coût. Sinon, en cas de potentialisation des solutions selon l'invention par des oxydants, il est avisé de limiter le pouvoir oxydant à 0,05 N, avantageusement à 0,02 N, de préférence à 0,01 N.

L'effet hypochlorite est renforcé par le système selon la présente invention, ce qui permet d'utiliser de faibles concentrations, en général des concentrations inférieures à 500 ppm (en masse de chlore Cl₂ par rapport à la masse de la solution traitante), plus généralement inférieures à 200 ppm, il est même possible de constater un effet entre les deux systèmes à des concentrations en chlore contenu inférieures à 100 ppm.

On peut également ajouter d'autres éléments comme des carbonates dans la solution à condition que cela n'altère pas la basicité initiale. La solution selon l'invention peut comporter, en outre, un bactéricide ou un bactériostatique.

Ainsi, la principale utilisation de cette solution est une mise en contact avec la denrée alimentaire à traiter, cette mise en contact étant le plus souvent réalisée par trempage, pulvérisation ou brumisation. Il est souhaitable que la durée du trempage, de la pulvérisation ou de la brumisation soit au plus égale à ½ heure, avantageusement au plus égale à 1/5, de préférence à 1/10. Elle est d'au moins 1 seconde, avantageusement 10 secondes, de préférence 20 secondes. Le contact peut se poursuivre partiellement après le trempage, la pulvérisation ou la brumisation, s'il n'y a pas rinçage.

Cette mise en contact peut être réalisée à une température au moins égale à 0°C, avantageusement à environ 10°C, de préférence à 20°C. Dans la présente description le terme "environ" est employé pour mettre en exergue le fait que les valeurs qui le suivent correspondent à des arrondis mathématiques et notamment que lorsque le ou les chiffres les plus à droite d'un nombre sont des zéros, ces zéros sont des zéros de position et non des chiffres significatifs, sauf bien entendu s'il en est précisé autrement.

Il est préférable, pour éviter d'altérer les aliments, de ne pas dépasser les températures modifiant la structure de l'aliment. Pour ce qui concerne les carcasses et les denrées alimentaires d'origine animale et non traitées, on peut réaliser cette mise en contact à une température égale à 80°C, avantageusement à 70°C.

La pression n'a que très peu d'influence sur le procédé selon la présente invention à la pression atmosphérique ou à une pression voisine et ce à toute altitude.

Ainsi que cela a déjà été mentionné la denrée alimentaire à traiter est avantageusement une denrée animale que ce soit des carcasses ou des carcasses après découpe, mais les résultats peuvent être obtenus sur d'autres produits comme par exemple les oeufs. Ce système de décontamination fonctionne également très bien pour des composés qui sont destinés à la congélation.

Les exemples suivants illustrent l'invention.

### Exemple

Mesure de l'effet du TSP (0,4%) en présence de différentes concentrations de NaOH sur *Salmonella typhimurium* IPL et *Escherichia coli* NIJH-JC2.

### B.1 Principe

### B.1.1. Culture

Un Erlenmeyer (10 ml) de Brain Heart Infusion (BHI) a été ensemencé avec une colonie de *Samonella typhimurium* IPL, ou de *E. coli* NIJH-JC2, puis mis à 37°C sur une table agitante. Après 18 h, la numération bactérienne était, respectivement, de ∼ 6. 10⁹ et 7. 10⁹ unités formant colonie par millilitre (UFC/ml). Après dilution à 1/500 en milieu de culture BHI, la numération bactérienne était de 1.10⁷ UFC/ml. Cette culture diluée a ensuite été utilisée pour le reste de l'expérience.

### B.1.2. Echantillons

Les différents mélanges de TSP et de NaOH ont été préparés préalablement, de telle sorte que les concentrations obtenues dans ces mélanges, soient le double des concentrations testées en finale. Ainsi par exemple, le TSP avait une concentration de 0,8%.

A t : 0 min, 0,5 ml de bactéries (diluées au 1/500) a été ajouté à 0,5 ml des différents mélanges, et laissé en contact pendant 30 s. 100 µl ont été prélevés, puis dilués en série (raison 10) en eau distillée stérile contenant du NaCI (9 g/l). 100 µl de chaque dilution ont été étalés sur boîte de Pétri (BHI + agar-agar 1,5%). Pour certains échantillons, 100 µl ont été directement étalés sur boîte sans être dilués.

Les boîtes ont été incubées 18 h à 37°C. Les colonies présentes sur les boîtes ont été dénombrées et le nombre d'UFC (unité formant colonies)/ml déduit.

### B.2 Résultats

| Echantillons | UFC/ml | |
|---|---|---|
| | *S. typhimurium* | *E. coli* |
| Contrôle | 7,00.10⁶ | 2,01.10⁶ |
| Contrôle (1 ) | 1,20.10⁷ | 2,08.10⁶ |
| TSP (0,4%) | 4,66.10⁶ | 4,06.10⁶ |
| TSP (0,4%) + NaOH (3,1) | 1,10⁶ | 2,10⁵ |
| TSP + NaOH (3,2) | 5,02.10⁴ | 2,25.10⁴ |
| TSP + NaOH (3,3) | 5,02.10⁴ | 5,54.10⁴ |
| TSP + NaOH (3,35) | 5,00.10⁴ | 4,32.10³ |
| TSP + NaOH (3,4) | 5,02.10⁴ | 1,52.10⁴ |
| TSP + NaOH (3,45) | 5,00.10⁴ | 5,19.10³ |
| TSP + NaOH (3,5) | 5,00.10⁴ | 3,75.10⁴ |
| TSP + NaOH (3,7) | 1,37.10⁴ | 3,35.10² |
| TSP + NaOH (4) | 2,08.10³ | 2,50.10⁰ |
| NaOH (3,1) | 3,88.10⁶ | 2,57.10⁶ |
| NaOH (3,3) | 3,38.10⁶ | 2,84.10⁶ |
| NaOH (3,5) | 9,50.10⁵ | 1,80.10⁶ |
| NaOH (3,7) | 1,78.10⁶ | 4,11.10⁵ |

### B.3 Conclusion

Utilisé seul à 0,4%, le TSP anhydre n'induit **aucune** bactéricidie pendant le temps de l'expérience (30 s), que ce soit sur une culture de *S. typhimurium* IPL ou de *E. coli* NIHJ-JC2. L'exposition de ces cultures à NaOH, seule, (3,1 à 3,5 g/l) n'induit pas non plus de bactéricidie. Mais utilisée à 3,7 g/l, la soude induit une diminution d'UFC/ml d'un facteur 4 à 5 sur *S. typhimurium* et *E. coli*, respectivement.

Utilisés en association, le TSP (0,4%) et la soude (3,2 g/l) induisent une diminution de 2 log du nombre d'UFC/ml sur les deux cultures.

Une augmentation de la concentration de soude (3,7 g/l) accroît la bactéricidie (- 4 log) sur la culture de *E. coli*.

L'addition simultanée de TSP (0,4%) et de NaOH (4 g/l) induit une réduction du nombre d'UFC/ml de 3 log pour *S. typhimurium* et de 6 log (limite de l'expérience) pour *E. coli*.

Il semble donc qu'une **forte synergie** soit induite entre le TSP (0,4%) et la soude, quand elle est ajoutée à une concentration supérieure à 0,4 g/l et surtout supérieure à 3,2 g/l.

## Revendications

1. Procédé de traitement d'aliment, **caractérisé par le fait qu'**il comporte une étape de mise en contact dudit aliment avec une solution présentant une concentration en OH⁻ comprise entre 0,02 et 0,2 N et, **par le fait que** ladite solution comporte, en outre, un sel tribasique de l'acide orthophosphorique de manière que le rapport entre la concentration initiale d'ions OH-, exprimée en équivalent, et la concentration en orthophosphates, soit au moins égal à 1/4, avantageusement à 1/3, de préférence à 1.

2. Procédé selon la revendication 1, **caractérisé par le fait que** la teneur en espèces orthophosphates soit au moins égale à 0,01 M et au plus égale à 0,1 M.

3. Procédé selon les revendications 1 et 2, **caractérisé par le fait que** la teneur initiale en ions OH- est au moins égale à 0,05 N.

4. Procédé selon les revendications 1 à 3, **caractérisé par le fait que** la teneur initiale en ions OH- est au plus égale à 0,1 N.

5. Procédé selon l'une des revendications 1 à 4, **caractérisé par le fait que** la teneur en ions phosphates est au plus égale à 0,1 N.

6. Procédé selon l'une des revendications 1 à 5, **caractérisé par le fait que** la teneur en espèces phosphates est au moins égale à 0,02 M.

7. Procédé selon l'une des revendications 1 à 6, **caractérisé par le fait que** les ions OH- sont sous forme d'hydroxydes alcalins, d'ammonium ou de phosphonium, ou de cations masqués par complexation.

8. Procédé selon l'une des revendications 1 à 7, **caractérisé par le fait que** les ions OH- sont sous forme d'hydroxyde de sodium ou de potassium.

9. Procédé selon l'une des revendications 1 à 8, **caractérisé par le fait que** le phosphate est un phosphate alcalin ou l'un de ses mélanges.

10. Procédé selon l'une des revendications 1 à 9, **caractérisé par le fait que** ladite étape est une étape de rinçage.

11. Procédé selon l'une des revendications 1 à 10, **caractérisé par le fait que** ladite mise en contact est réalisée par trempage, pulvérisation, brumisation.

12. Procédé selon l'une des revendications 1 à 11, **caractérisé par le fait que** ladite mise en contact est réalisée à une température au moins égale à 0°C, avantageusement à 10°C.

13. Procédé selon l'une des revendications 1 à 12, **caractérisé par le fait que** ladite mise en contact est réalisée à une température au plus égale à 80°C, avantageusement à 70°C.

14. Procédé selon l'une des revendications 1 à 13, **caractérisé par le fait que** ladite mise en contact est réalisée à une pression atmosphérique.

15. Procédé selon l'une des revendications 1 à 14, **caractérisé par le fait que** ledit aliment est un aliment animal.

16. Utilisation pour la décontamination bactérienne d'une solution présentant une concentration en OH- comprise entre 0,02 et 0,2 et par le fait que l'on y ajoute un sel tribasique de l'acide orthophosphorique de manière que la teneur en espèces orthophosphates soit au moins égale à 0,01 M et au plus égale à 0,1 M.

17. Utilisation selon la revendication 16, **caractérisée par le fait que** le rapport entre la concentration initiale d'ions OH- en la concentration en orthophosphates exprimée en équivalent est au moins égal à 1/4, avantageusement à 1/3, de préférence à 1.

18. Utilisation selon les revendications 16 et 17, **caractérisée par le fait que** la solution comporte, en outre, un bactéricide ou un bactériostatique.

19. Utilisation selon les revendications 16 à 18, **caractérisée par le fait que** la solution comporte, en outre, au plus 200 ppm d'eau de Javel (exprimés en masse de chlore Cl₂).

## Patentansprüche

1. Verfahren zur Behandlung eines Lebensmittels, **dadurch gekennzeichnet, daß** es eine Stufe des Inkontaktbringens des Lebensmittels mit einer Lösung, die eine OH⁻-Konzentration zwischen 0,02 und 0,2 N aufweist, und daß die Lösung außerdem ein dreibasisches Salz der Orthophosphorsäure umfaßt, so daß das Verhältnis zwischen der Anfangs-OH⁻-Ionenkonzentration, ausgedrückt in Äquivalenten, zu der Konzentration an Orthophosphaten mindestens 1/4, vorteilhafterweise 1/3, vorzugsweise 1 ist.

2. Verfahren nach Anspruch 1, **dadurch gekennzeichnet, daß** der Gehalt an Orthophosphat-Arten mindestens 0,01 M und höchstens 0,1 M ist.

3. Verfahren nach Anspruch 1 oder Anspruch 2, **dadurch gekennzeichnet, daß** der Anfangsgehalt an OH⁻-Ionen mindestens 0,05 N ist.

4. Verfahren nach den Ansprüchen 1 bis 3, **dadurch gekennzeichnet, daß** der Anfangsgehalt an OH⁻-Ionen höchstens 0,1 N ist.

5. Verfahren nach einem der Ansprüche 1 bis 4, **dadurch gekennzeichnet, daß** der Gehalt an Phosphationen höchstens 0,1 N ist.

6. Verfahren nach einem der Ansprüche 1 bis 5, **dadurch gekennzeichnet, daß** der Gehalt an Phosphat-Arten mindestens 0,02 M ist.

7. Verfahren nach einem der Ansprüche 1 bis 6, **dadurch gekennzeichnet, daß** die OH⁻-Ionen in Form von Alkalihydroxiden, von Hydroxiden von Ammonium oder Phosphonium oder von Kationen, die durch Komplexierung maskiert sind, vorliegen.

8. Verfahren nach einem der Ansprüche 1 bis 7, **dadurch gekennzeichnet, daß** die OH⁻-Ionen in Form von Natriumhydroxid oder Kaliumhydroxid vorliegen.

9. Verfahren nach einem der Ansprüche 1 bis 8, **dadurch gekennzeichnet, daß** das Phosphat ein Alkaliphosphat oder eines seiner Gemische ist.

10. Verfahren nach einem der Ansprüche 1 bis 9, **dadurch gekennzeichnet, daß** die Stufe eine Waschstufe ist.

11. Verfahren nach einem der Ansprüche 1 bis 10, **dadurch gekennzeichnet, daß** das Inkontaktbringen durch Wässerung, Pulverisierung, Vernebelung durchgeführt wird.

12. Verfahren nach einem der Ansprüche 1 bis 11, **dadurch gekennzeichnet, daß** das Inkontaktbringen bei einer Temperatur von mindestens 0 °C, vorteilhafterweise 10 °C, durchgeführt wird.

13. Verfahren nach einem der Ansprüche 1 bis 12, **dadurch gekennzeichnet, daß** das Inkontaktbringen bei einer Temperatur von höchstens 80 °C, vorteilhafterweise 70 °C, durchgeführt wird.

14. Verfahren nach einem der Ansprüche 1 bis 13, **dadurch gekennzeichnet, daß** das Inkontaktbringen bei Atmosphärendruck durchgeführt wird.

15. Verfahren nach einem der Ansprüche 1 bis 14, **dadurch gekennzeichnet, daß** das Lebensmittel ein tierisches Lebensmittel ist.

16. Verwendung einer Lösung, die eine OH⁻-Konzentration zwischen 0,02 und 0,2 N hat und der man ein dreibasisches Salz der Orthophosphorsäure derart zugesetzt hat, daß der Gehalt an Orthophosphat-Arten mindestens 0,01 M und höchstens 0,1 M ist, zur bakteriellen Dekontaminierung.

17. Verfahren nach Anspruch 16, **dadurch gekennzeichnet, daß** das Verhältnis zwischen der Anfangskonzentration an OH⁻-Ionen und der Konzentration an Orthophosphaten, ausgedrückt in Äquivalenten, mindestens 1/4, vorteilhafterweise 1/3, vorzugsweise 1 ist.

18. Verwendung nach Anspruch 16 oder Anspruch 17, **dadurch gekennzeichnet, daß** die Lösung außerdem ein bakterizides Mittel oder ein Bakteriostatikum umfaßt.

19. Verwendung nach den Ansprüchen 16 bis 18, **dadurch gekennzeichnet, daß** die Lösung außerdem höchstens 200 ppm Eau de Javel (ausgedrückt als Chlormasse, Cl₂) umfaßt.

## Claims

1. A process for treating food, **characterized in that** it comprises a step for bringing said food into contact with a solution with an OH⁻ concentration in the range from 0.02 to 0.2 N and **in that** said solution also comprises a tribasic salt of orthophosphoric acid such that the ratio between the initial OH⁻ ion concentration, expressed in equivalents, and the concentration of orthophosphates is at least 1/4, advantageously 1/3, preferably 1.

2. A process according to claim 1, **characterized in that** the orthophosphate species content is at least 0.01 M and at most 0.1 M.

3. A process according to claim 1 or claim 2, **characterized in that** the initial OH⁻ ion concentration is at least 0.05 N.

4. A process according to claims 1 to 3, **characterized in that** the initial OH⁻ ion concentration is at most 0.1 N.

5. A process according to one of claims 1 to 4, **characterized in that** the phosphate ion content is at most 0.1 N.

6. A process according to one of claims 1 to 5, **characterized in that** the phosphate species content is at least 0.02 M.

7. A process according to one of claims 1 to 6, **characterized in that** the OH⁻ ions are in the form of alkali, ammonium or phosphonium hydroxides, or of cations masked by complexing.

8. A process according to one of claims 1 to 7, **characterized in that** the OH⁻ ions are in the form of sodium or potassium hydroxide.

9. A process according to one of claims 1 to 8, **characterized in that** the phosphate is an alkali phosphate or a mixture of alkali phosphates.

10. A process according to one of claims 1 to 9, **characterized in that** said step is a rinsing step.

11. A process according to one of claims 1 to 10, **characterized in that** said contact is achieved by immersion, spraying or fogging.

12. A process according to one of claims 1 to 11, **characterized in that** said contact is carried out at a temperature of at least 0°C, advantageously 10°C.

13. A process according to one of claims 1 to 12, **characterized in that** said contact is carried out at a temperature of at most 80°C, advantageously 70°C.

14. A process according to one of claims 1 to 13, **characterized in that** said contact is carried out at atmospheric pressure.

15. A process according to one of claims 1 to 14, **characterized in that** said food is animal food.

16. Use of a solution with an OH⁻ concentration in the range 0.02 to 0.2 and to which a tribasic salt of orthophosphoric acid has been added such that the orthophosphate species content is at least 0.01 M and at most 0.1 M, for bacterial decontamination.

17. Use according to claim 16, **characterized in that** the ratio between the initial concentration of OH⁻ ions and the concentration of orthophosphates, expressed as an equivalent, is at least 1/4, advantageously 1/3, preferably 1.

18. Use according to claim 16 and claim 17, **characterized in that** the solution further comprises a bactericide or bacteriostatic.

19. Use according to claims 16 to 18, **characterized in that** the solution further comprises at most 200 ppm of bleach (expressed as the mass of chlorine Cl₂).
